# EUROPÄISCHE PATENTSCHRIFT

(11) **EP 3 772 605 B1**
(45) Veröffentlichungstag und Bekanntmachung des Hinweises auf die Patenterteilung: **06.12.2023**
(21) Anmeldenummer: 20188467.3
(22) Anmeldetag: 29.07.2020
(51) Int. Cl.: F16K 3/03, F16K 31/53

(54) **VERSCHLUSSVORRICHTUNG FÜR EINE GASFÜHRENDE LEITUNG**
SEALING DEVICE FOR A GAS-CONVEYING CONDUIT
DISPOSITIF DE FERMETURE POUR UNE CONDUITE D'ÉCOULEMENT DE GAZ

(30) Priorität: 05.08.2019 DE 102019121073
(43) Veröffentlichungstag der Anmeldung: 10.02.2021
(73) Patentinhaber: KÖRA-PACKMAT Maschinenbau GmbH, 78667 Villingendorf (DE)
(72) Erfinder: Kießling, Volkmar, 78667 Villingendorf (DE)
(74) Vertreter: Witte, Weller & Partner Patentanwälte mbB

(56) Entgegenhaltungen:
- EP-A1- 3 477 165
- EP-A2- 2 075 889
- JP-A- 482 124
- US-A- 2 307 273
- US-A1- 2011 132 905
- US-B1- 6 271 486

## Beschreibung

Die vorliegende Erfindung betrifft eine Verschlussvorrichtung für eine gasführende Leitung.

Bei der Steuertechnik und Antriebstechnik von Maschinen kann die Notwendigkeit bestehen, einen Strom von Gas, insbesondere von Luft, sehr schnell und mit sehr großer Änderung der Durchflussmenge zu steuern. Insbesondere kann dabei die Anforderung bestehen, die Durchflussmenge von einem Maximum auf ein Minimum bzw. von einem Minimum auf ein Maximum zu verändern.

Aufgrund von teilweise sehr hohen Produktionsgeschwindigkeiten kann es insbesondere erforderlich sein, die Änderung der Durchflussmenge innerhalb einer Zeit von 100 ms, bevorzugt höchstens 50 ms und besonders bevorzugt höchstens 30 ms zu erzielen, insbesondere von einem Maximum auf ein Minimum bzw. von einem Minimum auf ein Maximum.

Eine weitere Anforderung besteht darin, dass der Gasstrom im geöffneten Zustand möglichst ungehindert, insbesondere völlig ungehindert, durch die Verschlussvorrichtung hindurchtreten kann. Es entstehen sonst Verwirbelungen, die den Gasstrom behindern und die tatsächliche Gasmenge gegenüber einer erwarteten Gasmenge reduzieren. Ferner können Vibrationen oder Geräusche entstehen.

Zudem kann bei einigen Anwendungen die Anforderung bestehen, dass die Verschlussvorrichtung einem Staudruck, der bei geschlossener Verschlussvorrichtung entsteht, eine ausreichende Widerstandskraft entgegenbringt. Es besteht sonst die Gefahr, dass die Verschlussvorrichtung, insbesondere bei der hohen Geschwindigkeit des Verschlussvorgangs, beschädigt wird oder nicht hinreichend abdichtet.

Es besteht zudem auch der Wunsch, dass die Größe der Verschlussvorrichtung möglichst gering ist. So sollte die Verschlussvorrichtung entlang der Gasdurchflussrichtung eine möglichst geringe Höhe bzw. Dicke haben. Ferner sollte die Ausdehnung der Verschlussvorrichtung senkrecht zu der Gasdurchflussrichtung im Verhältnis zum Querschnitt der Gasdurchtrittsöffnung möglichst klein sein, insbesondere nicht mehr als dreimal so groß wie die Gasdurchtrittsfläche.

Schließlich ist es bevorzugt, wenn die Verschlussvorrichtung eine Modulbauweise hat, die sich auch in bestehenden Systemen einfach nachrüsten lässt.

EP 3 477 165 A1 betrifft ein Steuerventil mit Blende zur Steuerung der Durchflussmenge eines Fluids, dadurch gekennzeichnet, dass es mindestens einen festen Rahmen, der eine Öffnung für den Durchgang des Fluids begrenzt, einen äußeren Zahnkranz, der eine erste kreisförmige Verzahnung begrenzt, die sich um eine Hauptachse herum erstreckt, einen inneren Zahnkranz, der eine zweite kreisförmige Verzahnung begrenzt, die sich um die Hauptachse herum erstreckt, eine Blende, die mehrere Klappen umfasst, die jeweils fest mit einem Zahnrad verbunden sind, das einen Satelliten bildet, der in die erste Verzahnung eingreift, und eine zweite Verzahnung aufweist, die sich um die zweite Verzahnung herum erstreckt und fest mit der ersten Verzahnung verbunden ist, gegenüber der ersten Verzahnung eine Blende, die mehrere Klappen aufweist, die jeweils mit einem Zahnrad verbunden sind, das einen Satelliten bildet, der mit dem äußeren Zahnkranz und dem inneren Zahnkranz kämmt, wobei mindestens einer der Zahnkränze ein sogenannter Antriebszahnkranz ist, der drehbeweglich montiert ist und die Blende zwischen einer geöffneten und einer geschlossenen Stellung verschiebt.

US 6 271 486 B1 betrifft einen Behälter für eine Waage, der einen rohrförmigen Körper und ein Schließventil aufweist, das aus mehreren Platten besteht, die schwenkbar um den Boden des Behälters zur Bewegung in einer Ebene quer zur Achse des Behälters angebracht sind. Die Platten werden durch einen gemeinsamen Riemen oder eine Kette gleichzeitig zwischen der offenen und der geschlossenen Stellung angetrieben, so dass die Schließkräfte der Platten ausgeglichen sind. Der Riemen ist über einen am Trichter angebrachten Hebel mit einem Antriebsmechanismus verbunden, der sich bei vollständig geschlossenen Platten vom Antriebsmechanismus löst, so dass der Trichter für Wägezwecke frei aufgehängt ist. Die Platten schaben beim Öffnen gegen den Boden des Trichters, so dass Material, das an den Platten haftet, abgeschabt wird.

EP 2 075 889 A2 betrifft ein Installationsgerät bestehend aus einem Gerätesockel und aus einem an dem Gerätesockel befestigten Tragrahmen, wobei an einer Rückseite des Gerätesockels Leitungen anschließbar sind und wobei an einer Frontseite des Gerätesockels ein Frontelement befestigt ist. Um ein Installationsgerät zu schaffen, das verschließbar und flachbauend ausgebildet ist, ist in das Frontelement ein Verschluss integriert, der in der Ebene des Frontelementes bewegbar ist.

US 2 307 273 A betrifft Ventil mit vier Schiebern, umfassend eine kreisförmige Kammer, eine Leitung, die sich durch die Kammer in der Nähe ihrer Mitte erstreckt, vier drehbare, hydraulisch ausbalancierte Schieber, die in der Kammer in gemeinsamen Ebenen angeordnet sind, die gleichmäßig voneinander und von der Mitte der Leitung beabstandet sind und die in die Leitung eingesetzt oder aus ihr herausgezogen werden können, einen Spalt zwischen der stromaufwärts gelegenen Fläche der Schieber und dem benachbarten Ende der Leitung, eine Ablenkplatte an der stromaufwärts gelegenen Fläche von mindestens einem der Schieber, die so angeordnet ist, daß sie quer über dem Spalt liegt, wenn die Schieber vollständig in die Leitung eingesetzt sind, eine drehbare Welle, die starr an jedem der Schieber senkrecht zur Ebene der Schieber befestigt ist, Mittel zum gemeinsamen Drehen der Wellen und ein Lager für jede der Wellen in der kreisförmigen Kammer.

US 2011/132905 A1 betrifft ein kappenloses Kraftstoffeinfüllsystem für ein Fahrzeug, das eine Verschlussanordnung umfasst, die eine Blendenanordnung bildet, die drehbar ist, um eine Dichtung für ein Kraftstoffeinfüllrohr zu bilden oder einen Zugang zu dem Kraftstoffeinfüllrohr bereitzustellen.

JP S 482124A offenbart auch eine Verschlussvorrichtung nach dem Oberbegriff des Anspruchs 1.

Bekannte Verschlussvorrichtungen bieten hier immer nur einen Kompromiss, bei dem stets einige der gewünschten Eigenschaften nicht oder nur unzureichend erfüllt werden können. Es ist daher eine Aufgabe der vorliegenden Erfindung, eine verbesserte Verschlussvorrichtung aufzuzeigen, die die bestehenden Forderungen möglichst weit, insbesondere vollständig, erfüllt.

Die Aufgabe wird gelöst durch eine Verschlussvorrichtung nach Anspruch 1.

Die Verschlussvorrichtung ist konstruktiv stabil und mechanisch zuverlässig. Da sich die Verschlusselemente in derselben Arbeitsebene bewegen und jedes Verschlusselement jeweils formschlüssig zum benachbarten Verschlusselement ausgebildet ist, wird ein schneller Wechsel zwischen der Flussposition und der Sperrposition ermöglicht.

Die quaderförmige Ausgestaltung des Grundkörpers ermöglicht eine modulare Bauweise, mittels derer die Verschlussvorrichtung einfach in bestehende Systeme integriert werden kann. Die Erstreckung der Verschlussvorrichtung in Längsrichtung, also parallel zur Gasdurchflussrichtung, ist dabei wesentlich geringer als die Erstreckung in Höhenrichtung und die Erstreckung in Breitenrichtung. Bei bevorzugten Ausgestaltungen ist die Erstreckung in Längsrichtung mindestens um den Faktor 2, bevorzugt mindestens um den Faktor 3, besonders bevorzugt mindestens um den Faktor 5 und insbesondere mindestens um den Faktor 7 kleiner als die Erstreckung in Höhenrichtung und die Erstreckung in Breitenrichtung.

Dadurch, dass die erste Öffnung rund und die zweite Öffnung rund sind, wird ermöglicht, die Verschlussvorrichtung mit möglichst geringen Abmaßen zu gestalten. Außerdem ist eine einfache Möglichkeit gegeben, die Verschlussrichtung an runde gasführende Leitungen anzuschließen.

Dadurch, dass die zweite Begrenzungsseite gerundet ist und ein Radius der zweiten Begrenzungsseite dem Radius der ersten Öffnung entspricht, werden besonders kompakte Abmaße der Verschlussvorrichtung ermöglicht. Dabei werden die Verschlusselemente beim Öffnen so weit nach außen gefahren, dass der Durchtritt von der ersten Öffnung zur zweiten Öffnung ungehindert möglich ist. Die zweite Begrenzungsseite liegt dann bei Betrachtung entlang der Gasdurchflussrichtung, also der Längsrichtung, an der Peripherie der ersten Öffnung an, insbesondere auch an der Peripherie der zweiten Öffnung an. Dadurch wird der Raum, der zwischen dem Gasdurchtritt und dem Rahmen gebildet ist, besonders gut genutzt. Es sei darauf hingewiesen, dass auch ein Radius der ersten Begrenzungsseite dem Radius der ersten Öffnung und insbesondere auch dem Radius der zweiten Öffnung entspricht, da die erste Begrenzungsseite komplementär zur zweiten Begrenzungsseite ausgebildet ist.

Da jedes Verschlusselement eine dritte Begrenzungsseite seiner flächigen Erstreckung aufweist, die in der Flussposition am Rahmen anliegt, wird auf diese Weise eine Endposition der Bewegung des Verschlusselements für die Flussposition definiert. Ferner ergibt sich eine gute Ausnutzung des verfügbaren Raums innerhalb der Verschlussvorrichtung, so dass die Verschlussvorrichtung insgesamt kompakt ausgestaltet werden kann.

Bei einer vorteilhaften Ausgestaltung erstreckt sich der Rahmen abschnittsweise in einer Längsrichtung und der Breitenrichtung und in der Längsrichtung und der Höhenrichtung.

Bei dieser Ausgestaltung umschließt der Rahmen die Längsrichtung bzw. die Gasdurchflussrichtung.

Bei einer weiteren bevorzugten Ausgestaltung weist die erste Begrenzungsseite eine erste Schrägkante auf und weist die zweite Begrenzungsseite eine zweite Schrägkante auf, die komplementär zueinander ausgebildet sind, so dass sich die erste Schrägkante und eine benachbarte zweite Schrägkante in der Sperrposition bei Betrachtung entlang der Längsrichtung zumindest teilweise überlappen.

Diese Ausgestaltung bietet eine besonders gute Abdichtung und eine besonders gute mechanische Stabilität bei einem auftretenden Staudruck.

Bei einer weiteren vorteilhaften Ausgestaltung weist die Verschlussvorrichtung mehrere Abtriebselemente auf, wobei an jedem Verschlusselement ein Abtriebselement der Abtriebselemente drehfest angeordnet ist, das in Wirkverbindung mit dem Stellelement steht, so dass bei einer Verlagerung des Stellelements ein Drehmoment auf das Abtriebselement ausgeübt wird, das das Verschlusselement um die Schwenkachse verschwenkt.

Diese Ausgestaltung bietet eine besonders robuste und mechanisch einfache Möglichkeit, um die Verschlusselemente von der Sperrposition in die Flussposition und umgekehrt zu verschwenken.

Bei einer weiteren vorteilhaften Ausgestaltung weist jedes der Abtriebselemente ein Zahnrad auf, das mit einer am Stellelement angeordneten Zahnschiene im Eingriff steht.

Diese Ausgestaltung ermöglicht eine besonders zuverlässige Kraftübertragung zwischen dem Stellelement und dem Abtriebselement. Zudem kann auf diese Weise sichergestellt werden, dass auch bei häufiger Betätigung des Stellelements keine Dejustage bezüglich des Schwenkwinkels entsteht.

Bei einer weiteren vorteilhaften Ausgestaltung ist das Stellelement als Ring ausgebildet, der mehrere Ausnehmungen aufweist, wobei die Abtriebselemente in die Ausnehmungen eingreifen.

Diese Ausgestaltung ist mechanisch zuverlässig und benötigt nur wenig Platz.

Bei einer weiteren vorteilhaften Ausgestaltung weist das Stellelement einen Hebel auf, der durch den Mantel des Grundkörpers in einem Schlitz nach außen geführt ist.

Diese Ausgestaltung unterstützt die modulare Verwendung der Verschlussvorrichtung.

Die Bedienung der Verschlusselemente, das heißt, das Schalten zwischen der Flussposition und der Sperrposition und umgekehrt, erfordert keinen Eingriff in die Verschlussvorrichtung. Es ist lediglich erforderlich, den von außen zugänglichen Hebel zu verlagern.

Bei einer weiteren vorteilhaften Ausgestaltung beträgt ein maximaler Schwenkwinkel der Verschlusselemente zwischen der Flussposition und der Sperrposition weniger als 90°, bevorzugt weniger als 80°, besonders bevorzugt weniger als 70° und insbesondere weniger als 60°.

Diese Ausgestaltung ermöglicht es, dass die Verschlusselemente nur um einen geringen Betrag verlagert werden müssen. Dies hilft dabei, die Verschlussgeschwindigkeit und die Öffnungsgeschwindigkeit gering zu halten.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, sofern der Rahmen der vorliegenden Ansprüche nicht verlassen wird.

Ausführungsbeispiele der Erfindung sind in der Zeichnung dargestellt und werden in der nachfolgenden Beschreibung näher erläutert. Es zeigen:
- Figur 1: eine Ausführungsform einer Verschlussvorrichtung für eine gasführende Leitung;
- Figur 2: eine Draufsicht in die Verschlussvorrichtung gemäß Figur 1 in der Flussposition;
- Figur 3: eine Draufsicht in die Verschlussvorrichtung gemäß Figur 1 in der Sperrposition;
- Figur 4: die Darstellung aus Figur 2 ohne das Stellelement;
- Figur 5: das Stellelement aus Figur 2; und
- Figur 6: eines der Verschlusselemente aus Figur 2.

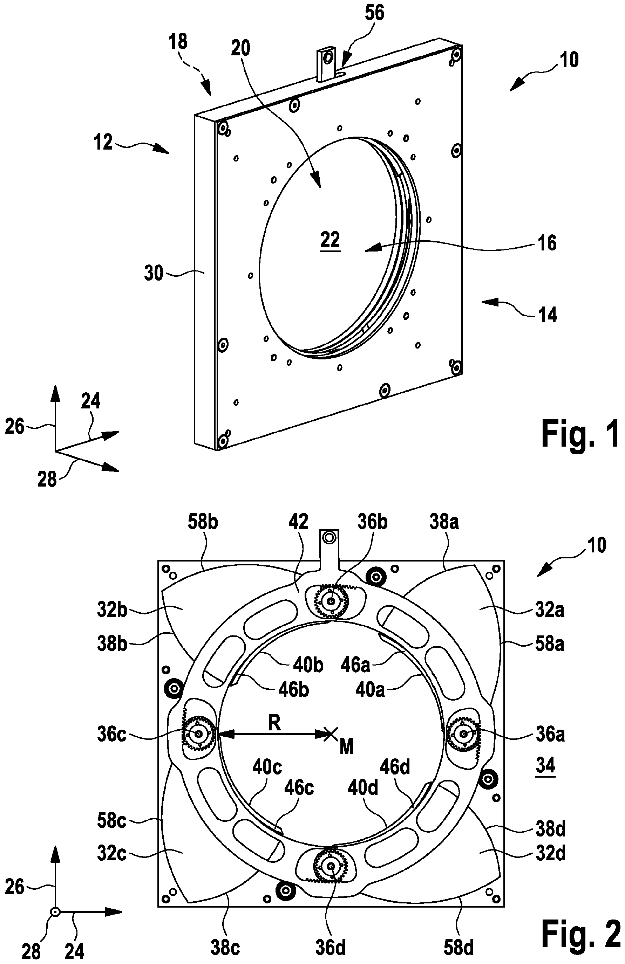

Figur 1 zeigt eine Verschlussvorrichtung 10 für eine gasführende Leitung.

Die Verschlussvorrichtung 10 weist einen Grundkörper 12 auf, der sich zwischen einer ersten Anschlussseite 14 mit einer ersten Öffnung 16 und einer zweiten Anschlussseite 18 (hier verdeckt) mit einer zweiten Öffnung 20 erstreckt. Es ist so ein Durchlass oder Gasdurchtritt 22 gebildet.

Die Anschlussseiten 14, 18 erstrecken sich jeweils in einer Breitenrichtung 24 und einer Höhenrichtung 26 und sind durch einen umlaufenden Rahmen 30, der einen Mantel des Grundkörpers 12 bildet, beabstandet. Zudem ist eine Längsrichtung 28 dargestellt.

Figur 2 zeigt, dass die Verschlussvorrichtung 10 ferner mehrere Verschlusselemente 32a-32d mit flächiger Erstreckung aufweist, die in einer Arbeitsebene 34 (hier die Zeichenebene) angeordnet sind. Die Arbeitsebene 34 erstreckt sich in der Breitenrichtung 24 und in der Höhenrichtung 26. Die Verschlusselemente 32a-32d sind zwischen der ersten Anschlussseite 14 und der zweiten Anschlussseite 18 angeordnet. Jedes der Verschlusselemente 32a-32d ist um eine Schwenkachse 36a-36d, die hier jeweils senkrecht zur Zeichenebene bzw. der Arbeitsebene 34 stehen, in der Arbeitsebene 34 verschwenkbar. Die Schwenkachsen 36a-36d sind senkrecht zu der flächigen Erstreckung der Verschlusselemente 32a-32d.

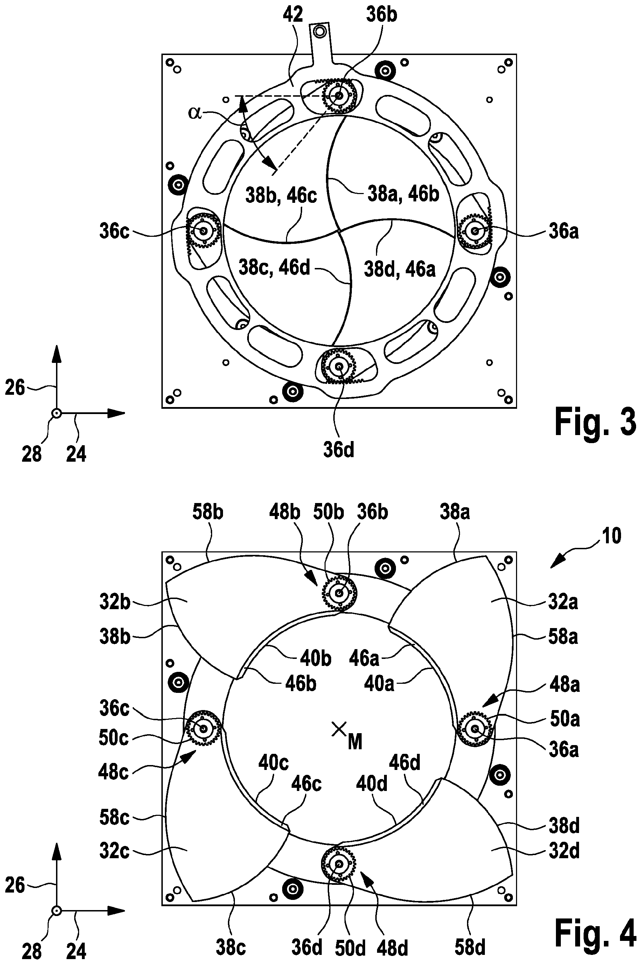

Diese Anordnung ermöglicht es, dass die Verschlusselemente 32a-32d in einer Sperrposition, siehe Figur 3, einen Durchfluss von Gas von der ersten Öffnung 16 zur zweiten Öffnung 20 blockieren und in einer Flussposition, siehe Figur 2, einen freien Durchfluss von Gas von der ersten Öffnung 16 zur zweiten Öffnung 20 erlauben.

Wie im Vergleich zwischen den Figuren 2 und 3 gut zu erkennen ist, weist jedes Verschlusselement 32a-32d eine erste Begrenzungsseite 38a-38d seiner jeweiligen flächigen Erstreckung und eine zweite Begrenzungsseite 40a-40d seiner jeweiligen flächigen Erstreckung auf, die komplementär zueinander ausgebildet sind. Dies bewirkt, dass jedes Verschlusselement 32a-32d in der Sperrposition mit seiner ersten Begrenzungsseite 38a-38d in der Arbeitsebene 34 formschlüssig an der zweiten Begrenzungsseite 40a-40d eines benachbarten Verschlusselements 32a-32d anliegt und mit seiner zweiten Begrenzungsseite 40a-40d in der Arbeitsebene 34 formschlüssig an der ersten Begrenzungsseite 38a-38d eines weiteren benachbarten Verschlusselements 32a-32d anliegt. Dies führt dazu, siehe Figur 3, dass die flächigen Erstreckungen in der Sperrposition den Durchfluss blockieren.

Jedes der Verschlusselemente 32a-32d weist zudem eine dritte Begrenzungsseite 58a-58d seiner flächigen Erstreckung auf, die insbesondere in der Flussposition am Rahmen 30 anliegen kann.

Die Verschlusselemente 32a-32d stehen mit einem gemeinsamen Stellelement 42 in Wirkverbindung, so dass die Verschlusselemente in einer Öffnungsposition des Stellelements 42 in der Flussposition sind und in einer Verschlussposition des Stellelements 42, siehe Figur 3, in der Sperrposition sind. Das Stellelement 42 ist von außerhalb des Grundkörpers 12 betätigbar.

Bei der hier gezeigten Ausführungsform ist der Grundkörper 12 quaderförmig. Außerdem sind die erste Anschlussseite 14 und die zweite Anschlussseite 18 rechteckig. Diese Ausgestaltung wird im Hinblick auf das Verhältnis der Größe der Anschlussseiten 14, 18 und der Größe der Öffnungen 16, 20 als vorteilhaft angesehen. Es sei aber darauf hingewiesen, dass auch andere Formen ohne weiteres realisiert werden können, wie zum Beispiel eine Dreiecks-, eine Fünfeck- oder eine Sechseckform.

Der Rahmen 30 erstreckt sich abschnittsweise in einer Längsrichtung 28 und der Breitenrichtung 24 und in der Längsrichtung 28 und der Höhenrichtung 26. Die erste Öffnung 16 und die zweite Öffnung 20 sind bei dieser Ausführungsform rund. Es können aber auch andere Formen für die Öffnungen 16, 20 gewählt werden, wie bspw. eine Ovalform, eine Viereck-, eine Fünfeck- oder eine Sechseckform.

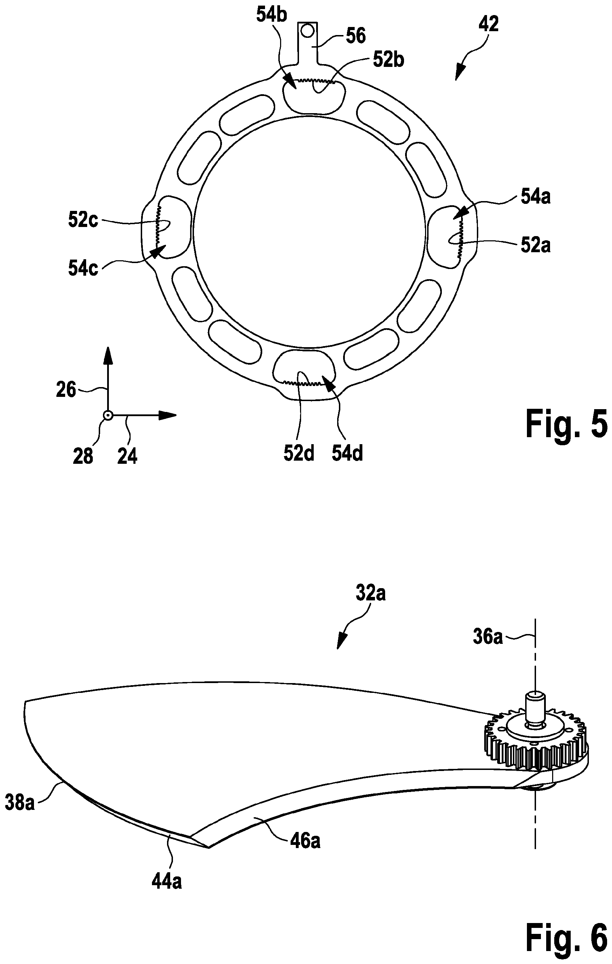

Die zweite Begrenzungsseite 40a-40d ist gerundet, und ein Radius der zweiten Begrenzungsseite 40a-40d entspricht dem Radius R der ersten Öffnung 16. Da die erste Begrenzungsseite 38a-38d mit der zweiten Begrenzungsseite 40a-40d formschlüssig zusammenwirkt, entspricht damit auch der Radius der ersten Begrenzungsseite 38a-38d dem Radius R der ersten Öffnung 16. Da bei dieser Ausführungsform die erste Öffnung 16 und die zweite Öffnung 20 dieselbe Ausgestaltung haben, hat auch die zweite Öffnung 20 den Radius R. Die erste Begrenzungsseite 38a-38d, siehe hierzu Figur 6 mit einer Darstellung des Verschlusselements 32a, eine erste Schrägkante 44a auf, und die zweite Begrenzungsseite 40a-40d weist eine zweite Schrägkante 46a auf, die komplementär zueinander ausgebildet sind. Dies bewirkt, dass sich die erste Schrägkante 44a-44d und eine benachbarte zweite Schrägkante 46a-46d in der Sperrposition bei Betrachtung entlang der Längsrichtung 28 zumindest teilweise überlappen.

Wie der Figur 4 gut zu entnehmen ist, weist die Verschlussvorrichtung 10 mehrere Abtriebselemente 48a-48d auf, wobei an jedem Verschlusselement 32a-32d ein Abtriebselement 48a-48d der Abtriebselemente 48a-48d drehfest angeordnet ist, das in Wirkverbindung mit dem Stellelement 42 steht. Dies führt dazu, dass bei einer rotierenden Verlagerung des Stellelements 42, insbesondere um den Mittelpunkt M der Verschlussvorrichtung 10, ein Drehmoment auf das Abtriebselement 48a-48d ausgeübt wird, das das Verschlusselement 32a-32d um die Schwenkachse 36a-36d verschwenkt.

Bei der hier gezeigten Ausführungsform weist jedes der Abtriebselemente 48a-48d ein Zahnrad 50a-50d auf, das mit einer am Stellelement 42 angeordneten Zahnschiene 52a-52d, siehe Figur 5, im Eingriff steht.

Wie in Figur 5 gut zu erkennen ist, ist das Stellelement 42 als Ring ausgebildet, der mehrere Ausnehmungen 54a-54d aufweist, wobei die Abtriebselemente 48a-48d in die Ausnehmungen 54a-54d eingreifen. Es ist zudem ein Hebel 56 des Stellelements zu erkennen, der durch den Mantel des Grundkörpers 12 in einem Schlitz 58 nach außen geführt ist.

Ein maximaler Schwenkwinkel α der Verschlusselemente 32a-32d zwischen der Flussposition und der Sperrposition beträgt hier weniger als 60°, siehe Figur 3.

## Patentansprüche

1. Verschlussvorrichtung (10) für eine gasführende Leitung, wobei die Verschlussvorrichtung (10) einen Grundkörper (12) aufweist, der sich zwischen einer ersten Anschlussseite (14) mit einer ersten runden Öffnung (16) und einer zweiten Anschlussseite (18) mit einer zweiten runden Öffnung (20) erstreckt, wobei sich die Anschlussseiten (14, 18) jeweils in einer Breitenrichtung (24) und einer Höhenrichtung (26) erstrecken und durch einen umlaufenden Rahmen (30) voneinander beabstandet sind, der einen Mantel des Grundkörpers (12) bildet, wobei die Verschlussvorrichtung (10) ferner vier Verschlusselemente (32a-32d) mit flächiger Erstreckung aufweist, die in einer Arbeitsebene (34) angeordnet sind, die sich in der Breitenrichtung (24) und der Höhenrichtung (26) erstreckt, und zwischen der ersten Anschlussseite (14) und der zweiten Anschlussseite (18) angeordnet sind, wobei jedes der Verschlusselemente (32a-32d) um eine Schwenkachse (36a-36d), die senkrecht zu der flächigen Erstreckung ist, in der Arbeitsebene (34) verschwenkbar ist, so dass die Verschlusselemente (32a-32d) in einer Sperrposition einen Durchfluss von Gas von der ersten Öffnung (16) zur zweiten Öffnung (20) blockieren und in einer Flussposition einen freien Durchfluss von Gas von der ersten Öffnung (16) zur zweiten Öffnung (20) erlauben, wobei jedes Verschlusselement (32a-32d) eine erste Begrenzungsseite (38a-38d) seiner flächigen Erstreckung und eine zweite gerundete Begrenzungsseite (40a-40d) seiner flächigen Erstreckung aufweist, die komplementär zueinander ausgebildet sind, so dass jedes Verschlusselement (32a-32d) in der Sperrposition mit seiner ersten Begrenzungsseite (38a-38d) in der Arbeitsebene (34) formschlüssig an der zweiten Begrenzungsseite (40a-40d) eines benachbarten Verschlusselements (32a-32d) anliegt und mit seiner zweiten Begrenzungsseite (40a-40d) in der Arbeitsebene (34) formschlüssig an der ersten Begrenzungsseite (38a-38d) eines weiteren benachbarten Verschlusselements (32a-32d) anliegt, so dass die flächigen Erstreckungen den Durchfluss blockieren, wobei die Verschlusselemente (32a-32d) mit einem gemeinsamen Stellelement (40) in Wirkverbindung stehen, so dass die Verschlusselemente (32a-32d) in einer Öffnungsposition des Stellelements (42) in der Flussposition sind und in einer Verschlussposition des Stellelements (42) in der Sperrposition sind, wobei das Stellelement (42) von außerhalb des Grundkörpers (12) betätigbar ist, und wobei ein Radius der zweiten Begrenzungsseite (40a-40d) dem Radius (R) der ersten Öffnung (16) entspricht, dadurch gekennzeichet, dass der Grundkörper (12) quaderförmig ist, dass die erste Anschlussseite (14) und die zweite Anschlussseite (18) quadratisch sind, und dass jedes Verschlusselement (32a-32d) eine dritte Begrenzungsseite (58a-58d) seiner flächigen Erstreckung aufweist, die in der Flussposition am Rahmen (30) anliegt.

2. Verschlussvorrichtung nach Anspruch 1, wobei sich der Rahmen (30) abschnittsweise in einer Längsrichtung (28) und der Breitenrichtung (24) und in der Längsrichtung (28) und der Höhenrichtung (26) erstreckt.

3. Verschlussvorrichtung nach einem der vorhergehenden Ansprüche, wobei die erste Begrenzungsseite (38a-38d) eine erste Schrägkante (44a-44d) aufweist und die zweite Begrenzungsseite (40a-40d) eine zweite Schrägkante (46a-46d) aufweist, die komplementär zueinander ausgebildet sind, so dass sich die erste Schrägkante (44a-44d) und eine benachbarte zweite Schrägkante (46a-46d) in der Sperrposition bei Betrachtung entlang der Längsrichtung (28) zumindest teilweise überlappen.

4. Verschlussvorrichtung nach einem der vorhergehenden Ansprüche mit mehreren Abtriebselementen (48a-48d), wobei an jedem Verschlusselement (32a-32d) ein Abtriebselement (48a-48d) der Abtriebselemente (48a-48d) drehfest angeordnet ist, das in Wirkverbindung mit dem Stellelement (42) steht, so dass bei einer Verlagerung des Stellelements (42) ein Drehmoment auf das Abtriebselement (48a-48d) ausgeübt wird, das das Verschlusselement (32a-32d) um die Schwenkachse (36a-36d) verschwenkt.

5. Verschlussvorrichtung nach Anspruch 4, wobei jedes der Abtriebselemente (48a-48d) ein Zahnrad (50a-50d) aufweist, das mit einer am Stellelement angeordneten Zahnschiene (52a-52d) im Eingriff steht.

6. Verschlussvorrichtung nach Anspruch 4 oder 5, wobei das Stellelement (42) als Ring ausgebildet ist, der mehrere Ausnehmungen aufweist, wobei die Abtriebselemente (48a-48d) in die Ausnehmungen (54a-54d) eingreifen.

7. Verschlussvorrichtung nach einem der vorhergehenden Ansprüche, wobei das Stellelement (42) einen Hebel (56) aufweist, der durch den Mantel des Grundkörpers (12) in einem Schlitz (58) nach außen geführt ist.

8. Verschlussvorrichtung nach einem der vorhergehenden Ansprüche, wobei ein maximaler Schwenkwinkel (a) der Verschlusselemente (32a-32d) zwischen der Flussposition und der Sperrposition weniger als 90°, bevorzugt weniger als 80°, besonders bevorzugt weniger als 70° und insbesondere weniger als 60° beträgt.

## Claims

1. A closing device (10) for a gas-conducting conduit, wherein the closing device (10) comprises a base body (12) extending between a first connecting side (14) with a first round opening (16) and a second connecting side (18) with a second round opening (20), wherein the connecting sides (14, 18) each extend in a width direction (24) and a height direction (26) and are spaced apart from one another by a circumferential frame (20) which forms a jacket of the base body (12), the closing device (10) further comprising four closing elements (32a-32d) with a substantially flat extension, which are arranged in a working plane (34) extending in the width direction (24) and the height direction (26) and are arranged between the first connecting side (14) and the second connecting side (18), each of the closing elements (32a-32d) being arranged about a pivot axis (36a-36d) which is perpendicular to the substantially flat extension, and being pivotable in the working plane (34) so that the closing elements (32a-32d) block a flow of gas from the first opening (16) to the second opening (20) in a blocking position and allow a free flow of gas from the first opening (16) to the second opening (20) in a flow position, wherein each closing element (32a-32d) has a first bounding side (38a-38d) of its substantially flat extension and a second rounded bounding side (40a-40d) of its substantially flat extension which are configured complementary to each other, so that each closing element (32a-32d) in the blocking position has its first bounding side (38a-38d) in the working plane (34) positively locking to a second bounding side (40a-40d) of an adjacent closing element (32a-32d) and its second bounding side (40a-40d) in the working plane (34) positively locking to a first bounding side (38a-38d) of a further adjacent closing element (32a-32d), so that the substantially flat extensions block the flow, wherein the closing elements (32a-32d) are in operative connection with a common actuating element (40), so that the closing elements (32a-32d) are in the flow position in an open position of the actuating element (42) and are in the blocking position in a closed position of the actuating element (42), and wherein the actuating element (42) can be actuated from outside the base body (12), **characterized in that** the base body (12) is cuboidal, that the first connecting side (14) and the second connecting side (18) are square, that a radius of the second bounding side (40a-40d) is rounded and a radius of the second bounding side (40a-40d) corresponds to the radius (R) of the first opening (16), and that each closing element (32a-32d) has a third bounding side (58a-58d) of its substantially flat extension, which, in the flow position, abuts the frame (30).

2. The closing device of claim 1, wherein the frame (30) extends in sections in a longitudinal direction (28) and the width direction (24) and in the longitudinal direction (28) and the height direction (26).

3. The closing device of any preceding claim, wherein the first bounding side (38a-38d) has a first beveled edge (44a-44d) and the second bounding side (40a-40d) has a second beveled edge (46a-46d) which are configured complementary to each other so that the first beveled edge (44a-44d) and an adjacent second beveled edge (46a-46d) at least partially overlap in the blocking position when viewed along the longitudinal direction (28).

4. The closing device of any preceding claim, comprising a plurality of drive output elements (48a-48d), wherein a drive output element (48a-48d) of the plurality of drive output elements (48a-48d) is arranged in a rotationally fixed manner on each closing element (32a-32d), which is in operative connection with the actuating element (42), so that when the actuating element (42) is displaced, a torque is exerted on the drive output element (48a-48d) which pivots the closing element (32a-32d) about the pivot axis (36a-36d).

5. The closing device of claim 4, wherein each of the drive output elements (48a-48d) has a gear (50a-50d) which engages with a toothed rail (52a-52d) arranged on the actuating element.

6. The closing device of claim 4 or 5, wherein the actuating element (42) is configured as a ring having a plurality of recesses, wherein the drive output elements (48a-48d) engage in the recesses (54a-54d).

7. The closing device of any preceding claim, wherein the actuating element (42) has a lever (56) which is guided outwards through the jacket of the base body (12) in a slot (58).

8. The closing device of any preceding claim, wherein a maximum pivot angle (α) of the closing elements (32a-32d) between the flow position and the blocking position is less than 90°, preferably less than 80°, more preferably less than 70°, and in particular less than 60°.

## Revendications

1. Dispositif de fermeture (10) pour une conduite de gaz, le dispositif de fermeture (10) présentant un corps de base (12) qui s'étend entre un premier côté de raccordement (14) avec une première ouverture ronde (16) et un deuxième côté de raccordement (18) avec une deuxième ouverture ronde (20), les côtés de raccordement (14, 18) s'étendent respectivement dans une direction de largeur (24) et une direction de hauteur (26) et sont espacés l'un de l'autre par un cadre périphérique (30) qui forme une enveloppe du corps de base (12), le dispositif de fermeture (10) présentant en outre quatre éléments de fermeture (32a-32d) avec une extension en nappe, qui sont disposés dans un plan de travail (34) qui s'étend dans la direction de largeur (24) et la direction de hauteur (26), et sont disposés entre le premier côté de raccordement (14) et le deuxième côté de raccordement (18), chacun des éléments de fermeture (32a-32d) pouvant pivoter dans le plan de travail (34) autour d'un axe de pivotement (36a-36d) qui est perpendiculaire à l'extension en nappe, de sorte que les éléments de fermeture (32a-32d) bloquent, dans une position de blocage, un passage de gaz de la première ouverture (16) vers la deuxième ouverture (20) et permettent, dans une position d'écoulement, un libre passage de gaz de la première ouverture (16) vers la deuxième ouverture (20), chaque élément de fermeture (32a-32d) présentant un premier côté de délimitation (38a-38d) de son extension en nappe et un deuxième côté de délimitation arrondi (40a-40d) de son extension en nappe, qui sont formés de manière complémentaire l'un par rapport à l'autre, de sorte que chaque élément de fermeture (32a-32d), dans la position de blocage, s'appuie par son premier côté de délimitation (38a-38d) dans le plan de travail (34) par engagement positif sur le deuxième côté de délimitation (40a-40d) d'un élément de fermeture (32a-32d) voisin, et s'applique par son deuxième côté de délimitation (40a-40d) dans le plan de travail (34) par engagement positif contre le premier côté de délimitation (38a-38d) d'un autre élément de fermeture (32a-32d) voisin, de sorte que les extensions en nappe bloquent l'écoulement, les éléments de fermeture (32a-32d) étant en liaison active avec un élément de réglage commun (40), de sorte que les éléments de fermeture (32a-32d) sont dans la position d'écoulement dans une position d'ouverture de l'élément de réglage (42) et sont dans la position de blocage dans une position de fermeture de l'élément de réglage (42), l'élément de réglage (42) pouvant être actionné de l'extérieur du corps de base (12), et un rayon du deuxième côté de délimitation (40a-40d) correspondant au rayon (R) de la première ouverture (16), **caractérisé en ce que** le corps de base (12) est parallélépipédique, **en ce que** le premier côté de raccordement (14) et le deuxième côté de raccordement (18) sont carrés, et **en ce que** chaque élément de fermeture (32a-32d) présente un troisième côté de délimitation (58a-58d) de son extension en nappe, qui s'applique contre le cadre (30) dans la position d'écoulement.

2. Dispositif de fermeture selon la revendication 1, dans lequel le cadre (30) s'étend par sections dans une direction longitudinale (28) et la direction de la largeur (24) et dans la direction longitudinale (28) et la direction de la hauteur (26).

3. Dispositif de fermeture selon l'une des revendications précédentes, dans lequel le premier côté de délimitation (38a-38d) comprend un premier bord incliné (44a-44d) et le deuxième côté de délimitation (40a-40d) comprend un deuxième bord incliné (46a-46d) qui sont formés de manière complémentaire l'un par rapport à l'autre, de sorte que le premier bord incliné (44a-44d) et un deuxième bord incliné adjacent (46a-46d) se chevauchent au moins partiellement dans la position de blocage lorsqu'on regarde le long de la direction longitudinale (28).

4. Dispositif de fermeture selon l'une des revendications précédentes, comportant plusieurs éléments de fermeture (48a-48d), un élément de fermeture (48a-48d) parmi les éléments de fermeture (48a-48d) étant monté solidaire en rotation sur chaque élément de fermeture (32a-32d), qui est en liaison active avec l'élément de réglage (42), de sorte que, lors d'un déplacement de l'élément de réglage (42), un couple est exercé sur l'élément de sortie (48a-48d), qui fait pivoter l'élément de fermeture (32a-32d) autour de l'axe de pivotement (36a-36d).

5. Dispositif de fermeture selon la revendication 4, dans lequel chacun des éléments de sortie (48a-48d) comporte une roue dentée (50a-50d) qui est en prise avec une crémaillère (52a-52d) disposée sur l'élément de réglage.

6. Dispositif de fermeture selon la revendication 4 ou 5, dans lequel l'élément de réglage (42) est réalisé sous la forme annulaire, qui présente plusieurs évidements, les éléments de sortie (48a-48d) s'engageant dans les évidements (54a-54d).

7. Dispositif de fermeture selon l'une des revendications précédentes, dans lequel l'élément de réglage (42) présente un levier (56) qui est guidé vers l'extérieur à travers l'enveloppe du corps de base (12) dans une fente (58).

8. Dispositif de fermeture selon l'une des revendications précédentes, dans lequel un angle de pivotement maximal (a) des éléments de fermeture (32a-32d) entre la position d'écoulement et la position de blocage est inférieur à 90°, de préférence inférieur à 80°, plus préférentiellement inférieur à 70° et notamment inférieur à 60°.
